# EUROPEAN PATENT APPLICATION

(11) **EP 4 209 519 A1**
(43) Date of publication of application: **12.07.2023**
(21) Application number: 23150280.8
(22) Date of filing: 04.01.2023
(51) Int. Cl.: C08F 210/02, C08G 67/00

(54) **METHOD FOR PREPARING EVA COPOLYMER WITH HIGH ETHYLENE CONTENT BY SOLUTION POLYMERIZATION UNDER A LOW TO A MEDIUM PRESSURE**

(30) Priority: 07.01.2022 CN 202210017295
(71) Applicant: Yunnan Zhengbang Technology Co., Ltd., 650100 Kunming Yunnan (CN)
(72) Inventor: Zou, Qian, Kunming, Yunnan (CN); Zhang, Cunhao, Kunming, Yunnan (CN); Chen, Lei, Kunming, Yunnan (CN); Riku, Iejun, Kunming, Yunnan (CN)
(74) Representative: Grünecker Patent- und Rechtsanwälte PartG mbB

(57) **Abstract**

The invention provides a method for preparing an EVA copolymer with a high ethylene content by solution polymerization under a low to a medium pressure, and belongs to the technical field of organic macromolecular compounds. The method comprises the following steps: initiating with a free radical initiator(s), a copolymerization reaction between ethylene and vinyl acetate in a solvent in a reactor under a low to a medium pressure to obtain the EVA copolymer; and continuing to add ethylene during the reaction to maintain the low to medium pressure, wherein the low to medium pressure is 1-101 MPa, and a ratio of a mass of the vinyl acetate to a mass of the initially added ethylene is (1:1) to (1:20). The amount of ethylene incorporated in the EVA copolymer prepared according to the method is ≥ 50wt%, and the EVA copolymer has properties equivalent to those of an EVA copolymer obtained by bulk polymerization at high temperature under high pressure, and is applicable to application fields to which the EVA copolymer prepared with a conventional method is applicable. Meanwhile, compared with the conventional method for preparing the EVA copolymer at high temperature under high pressure, the method according to the invention also greatly reduces the equipment investment and the high energy-consumption cost during production.

## Description

### BACKGROUND OF THE INVENTION

### 1. Technical Field

The invention belongs to the technical field of organic macromolecular compounds, and in particular, relates to a method for preparing an EVA copolymer with high ethylene content in a solution under a low to a medium pressure.

### 2. Description of Related Art

Ethylene vinyl acetate (EVA) is a copolymer prepared by free radical polymerization of ethylene and vinyl acetate monomers. EVA is the fourth major ethylene-containing polymer following low-density polyethylene (LDPE), high-density polyethylene (HDPE), and linear low-density polyethylene (LLDPE), and has a very important position in modern industry. Ethylene and vinyl acetate can produce copolymers having different properties in different production processes. In a conventional production process of EVA, a high-pressure and high-temperature polymerization device for the production of LDPE is utilized to carry out bulk free radical polymerization under high-pressure (1,000-3,000 bar) and high-temperature (150°C-200°C) conditions. Despite being a relatively mature technology for producing EVA with the vinyl acetate incorporation ranging from 5 to 40%, the capital costs are generally very high for the existing technology due to the high pressure and high temperature requirements for the operation. With physical properties such as high strength, high gloss, high transparency, and softness, the prepared EVA is generally applied in the fields of hot melt adhesives, shoemaking, foaming, injection molding, wires and cables, and food packaging. Especially, due to the development of photovoltaic industry in recent years, EVA has played a critical role in the field of photovoltaic films.

Ethylene and vinyl acetate can also undergo emulsion polymerization under low-pressure and low-temperature conditions to obtain a product that is generally called VAE copolymer in industry, and the content of VA in the VAE copolymer is generally more than 60%. The VAE copolymer is generally applied in the form of emulsion or rubber resin. Due to its high VA content, the resulting copolymer is an elastomer, and thus is not applicable to the aforementioned application fields of the EVA copolymer.

The solution polymerization of EVA under a low to a medium pressure can greatly reduce the investment in production equipment in an early stage. However, the process for producing EVA with a high ethylene content (> 50wt%) using a solution polymerization under a low to a medium pressure is not mature at present, and there is still plenty of room for improvement. Japanese Patent Application No. JP1999116638A discloses a method for polymerizing EVA in a methanol solvent, whereby the amount of ethylene incorporated in the resulting EVA is only 21wt%, 35% by mole. Chinese Patent Application No. CN106543343A discloses a method for preparing an EVA elastomer, whereby ethylene and vinyl acetate undergo free radical copolymerization in a solvent in a single reactor under the initiation of an initiator. The process of free radical copolymerization includes stages of pre-polymerization, chain growth, and chain termination, which are performed at different temperatures, respectively, to prepare the EVA elastomer. Moreover, the temperature in the stage of pre-polymerization is controlled at 35°C-60°C; the temperature in the stage of chain growth is controlled at 55°C-75°C; and the temperature in the stage of chain termination is controlled at 45°C-70°C. Compared with JP1999116638A, this patent application improves the amount of ethylene incorporated in EVA, which, however, is still below 40wt%. It is still not applicable to the aforementioned application fields of EVA copolymer.

### BRIEF SUMMARY OF THE INVENTION

In order to solve the above problems, the invention provides a method for preparing an EVA copolymer with an ethylene incorporation amount of more than 50wt% by means of a solution polymerization method under a low to a medium pressure and at low temperature. The EVA copolymer prepared by this method has properties equivalent to those of an EVA copolymer obtained by conventional bulk polymerization at high temperature under high pressure, and is applicable to the application fields to which the EVA copolymer prepared using the conventional method is applicable. Meanwhile, the method also greatly reduces the equipment investment and the high-energy-consumption cost in production as compared with the conventional method for preparing the EVA at high temperature under high pressure.

To achieve the object above, the invention employs the following technical solutions.

A method for preparing an EVA copolymer with a high ethylene content by solution polymerization under a low to a medium pressure comprises the following steps: initiating with a free radical initiator(s), a copolymerization reaction between ethylene and vinyl acetate in a solvent in a reactor under a low to a medium pressure to obtain the EVA copolymer; and continuing to add ethylene during the reaction to maintain the low to medium pressure, wherein the low to medium pressure is between 1 MPa and 101 MPa, and a ratio of a mass of the vinyl acetate to a mass of the initially added ethylene is (1:1) to (1:20).

The pressure of the ethylene in the polymerization reaction system of the invention is controlled at 1 MPa (10 atmospheres) at minimum, and 101 MPa (1010 bar) at most. During the entire reaction, the pressure of the ethylene may be kept constant, or varied with the progression of reaction. During the reaction, excessively low pressure (below 1 MPa) of ethylene is unfavorable for the increase of a concentration of the ethylene in the reaction system, and it is certainly necessary to increase the amount of the solvent used. Under a low to a medium pressure, the amount of the solvent used may be properly reduced, and meanwhile, the temperature for the polymerization reaction may be properly raised to accelerate the reaction so as to shorten a production cycle.

The initial concentration of the vinyl acetate in the reaction system has a great impact on the effective synthesis of EVA, and the ratio of the mass of the vinyl acetate to the initial mass of the ethylene requires to be controlled within the range from 1:1 to 1:20. When the ratio of the mass of the vinyl acetate to the initial mass of the ethylene added is too small, the polymerization reaction is slow, and it is difficult to initiate initial polymerization; slow reaction will also affect the feasibility of industrial production; and when the ratio is too big, the amount of the ethylene incorporated in the copolymer is greatly reduced, and the desired EVA cannot be synthesized.

The method of the invention has no limit on the polymerization temperature, for which, however, the optimum temperature should be selected according to the selected solvent and the pressure of ethylene condition. High polymerization temperature may increase the polymerization rate. Along with different polymerization temperatures, different free radical initiators should be selected to ensure the availability of sufficient concentration of free radicals.

Preferably, the low to medium pressure is between 4 MPa and 95 MPa, more preferably, between 4 MPa and 81 MPa, further more preferably between 6 MPa and 20 MPa.

Preferably, the ratio of the mass of the vinyl acetate to the mass of the initially added ethylene is (1:1) to (1:10).

More preferably, the mass of the vinyl acetate added does not exceed 50% of the total mass of all monomers added.

The vinyl acetate monomer may be pre-added to the reactor, or dropwise added during the reaction. When the total mass of the vinyl acetate monomer added exceeds 50% of the total mass of all monomers added, the amount of the ethylene incorporated in the EVA greatly decreases, and may even decrease to below 50wt%.

Further preferably, the ratio of the mass of the vinyl acetate to the mass of the initially added ethylene is (1:2.5) to (1:8.5).

More further preferably, the mass of the vinyl acetate added does not exceed 30% of the total mass of all monomers added.

Preferably, the mass of the free radical initiator(s) is 0.05% to 1% of the total mass of all monomers.

More further preferably, the mass of free radical initiator(s) is 0.1% to 0.6% of the total mass of all monomers.

Preferably, the method further comprises the step of adding a third monomer to a reaction system, wherein the third monomer is one or more selected from olefins, acrylates, methacrylates, unsaturated acids, and acrylonitrile; the olefins comprise propylene, n-butene, 1-hexene, 1,5-dihexene, 1-octene, 1,7-dioctene, and vinyl chloride; the acrylates comprise methyl acrylate, ethyl acrylate, n-butyl acrylate, isobutyl acrylate, n-propyl acrylate, 2-ethylhexyl acrylate, n-octyl acrylate, isooctyl acrylate, decyl acrylate, 2-hydroxyethyl acrylate, and 2-hydroxypropyl acrylate; the methacrylates comprise methyl methacrylate, ethyl methacrylate, isobutyl methacrylate, n-butyl methacrylate, tert-butyl methacrylate, isopropyl methacrylate, hexyl methacrylate, 2-hydroxyethyl methacrylate, 2-hydroxypropyl methacrylate, glycidyl methacrylate, cyclohexyl methacrylate, and dimethylaminoethyl methacrylate; and the unsaturated acids comprise acrylic acid, methacrylic acid, itaconic acid, crotonic acid, and maleic acid.

In the method of the invention, the third monomer may be added at an early stage of the polymerization reaction or during polymerization to adjust the material properties of a polymerization product. For example, the addition of a difunctional or multifunctional monomer available for free radical polymerization can increase the molecular weight of the EVA copolymer and adjust the melt index of the same.

Preferably, the solvent is one or more selected from C1-C6 alcoholic solvents, C1-C6 alcohol and water mixture, supercritical CO₂, saturated aliphatic solvents, halogenated hydrocarbon solvents, naphthenic hydrocarbon solvents, aromatic hydrocarbon solvents, ester solvents, ketone solvents, aldehyde solvents, furan solvents, as well as acetic acid, ether, triethylamine, n-butyl mercaptan; the C1-C6 alcoholic solvents comprise methanol, ethanol, propanol, isopropanol, n-butanol, tert-butanol, isobutanol, n-pentanol, and n-hexanol; the saturated aliphatic solvents comprise n-pentane, hexane, n-heptane, n-octane, n-decane, n-dodecane, and isododecane; the halogenated hydrocarbon solvents comprise chloromethane, dichloromethane, chloroform, carbon tetrachloride, bromoethane, chloro-n-butane, bromo-n-butane, and iodo-n-butane; the naphthenic hydrocarbon solvents comprise cyclopentane, methylcyclopentne, cyclohexane and methylcyclohexane; the aromatic hydrocarbon solvents comprise benzene, toluene, ethylbenzene, xylene, and cumene; the ester solvents comprise methyl acetate, ethyl acetate, dimethyl carbonate, and diethyl carbonate; the ketone solvents comprise acetone and butanone; the aldehyde solvents comprise acetaldehyde and crotonaldehyde; and the furan solvents comprise tetrahydrofuran.

The solvent selected in the invention is preferably a good solvent for the ethylene monomer, in order to increase the initial concentration of the ethylene monomer in the reaction system. The selected good solvent for the ethylene can greatly decrease the requirement of the reaction system for the pressure of the ethylene, under the same condition.

Preferably, the method further comprises the step of adding a chain transfer agent to the reaction system, wherein the chain transfer agent is lauryl mercaptan and/or mercaptoethanol.

In the method of the invention, the free-radical chain transfer agent may be added at the early stage of the polymerization reaction or during the polymerization, in order to control the molecular weight and melt index of the EVA copolymer.

Preferably, the free radical initiator is an azo initiator and/or a peroxide initiator.

The azo and/or peroxide initiator(s) commonly used in the market, such as perester, perketal, peroxyketone, percarbonate, di-tert-butyl peroxide, isopropylbenzene peroxide neodecanoate, and tert-amyl perpivalate, may be selected as the free radical initiator. Before being added to the reaction system, the free radical initiator may be dissolved in the vinyl acetate monomer or solvent, such as vinyl acetate or ethyl acetate.

In the EVA copolymer prepared according to any of the methods described above, the percent content by mass of the ethylene in the EVA copolymer is ≥ 50%.

Preferably, the percent content by mass of the ethylene in the EVA copolymer is ≥ 65%.

Further preferably, the percent content by mass of the ethylene in the EVA copolymer is ≥ 70%.

Compared with the prior art, the invention has the following beneficial effects: the amount of ethylene incorporated into the EVA copolymer prepared with the method of the invention is ≥ 50wt%, and the EVA copolymer has properties equivalent to those of an EVA copolymer obtained by bulk polymerization at high temperature under high pressure, and is applicable to application fields to which the EVA copolymer prepared with a conventional method is applicable. Meanwhile, compared with the conventional method for preparing EVA at high temperature under high pressure, the method according to the invention also greatly reduces the equipment investment and the high energy-consumption cost during production.

### DETAILED DESCRIPTION OF THE INVENTION

The technical solutions of the invention will be described clearly and completely below in conjunction with the embodiments. Obviously, the embodiments described are merely some of rather than all of the embodiments of the invention. Based on the embodiments of the invention, every other embodiment that can be achieved by a person of ordinary skills in the art without creative efforts shall fall within the protection scope of the invention. Any equivalent transformation or substitution made by a person skilled in the art based on the following embodiments shall fall within the protection scope of the invention.

### Example 1

In this example, the method for preparing the EVA copolymer with high ethylene content by polymerization in solution under a low to a medium pressure was as follows.

A 5 L high-pressure stainless-steel reactor was evacuated three times with nitrogen to remove moisture and oxygen in the reactor. The reactor was provided with a mechanical stirrer, temperature and pressure measuring devices, and a feeding port. 1050 g of tert-butanol, 175 g of vinyl acetate, and 2.99 g of azobisisobutyronitrile (AIBN) initiator were added under vacuum, and after all components were added, the reactor was continuously evacuated three times with nitrogen for replacement. Then, ethylene was added while the system is heated up to 64°C and the reaction pressure rose to 6 MPa. Here, the amount of the ethylene added was 525 g (the ratio of the mass of the vinyl acetate to the initial mass of the ethylene was 1:3). Taking the temperature reaching 64°C as the start of the reaction, ethylene was then added continuously to maintain the pressure of ethylene at 6 MPa throughout the 12 h reaction time, and the temperature was controlled at 64°C during the reaction; and after the reaction started, 1.68 g of AIBN initiator (10wt%) dissolved in ethyl acetate was continuously added. After 12 hours of reaction, the total amount of ethylene added was 724 g. The reactor was depressurized 12 h after the reaction, 1 g of sorbic acid was added to terminate the polymerization reaction, and then the resulting polymer was discharged. The polymer had a solid content of 26.05%, with a theoretical solid content of 46.13%, and a monomer conversion rate was 56.47%. The incorporation amount of ethylene was 70% as measured with the FTIR method, and a melt flow index at 219 g/10 min (190°C/2.16 kg).

### Example 2

In this example, the method for preparing the EVA copolymer with high ethylene content by polymerization in solution under a low to a medium pressure was as follows.

A 5 L high-pressure stainless-steel reactor was evacuated three times with nitrogen o remove moisture and oxygen in the reactor. The reactor was provided with a mechanical stirrer, temperature and pressure measuring devices, and a feeding port. 439 g of cyclohexane, 330 g of vinyl acetate, 50 g of methacrylic acid, and 2.82 g of AIBN initiator were introduced under vacuum, and after all components were added, the reactor was evacuated three times with nitrogen for replacement. Then, ethylene was added while the system was heated to 64°C and the reaction pressure rose to 6 MPa. Here, the amount of the ethylene added was 601 g (the ratio of the mass of the vinyl acetate to the initial mass of the ethylene was 1:1.82). Taking the temperature reaching 64°C as the start of the reaction, ethylene was then added continuously to maintain the pressure of ethylene at 6 MPa throughout the 12 h reaction time, and the temperature was controlled at 64°C during the reaction; and after the reaction started, 0.79 g of AIBN initiator (10wt%) dissolved in ethyl acetate was continuously added. After 12 hours of reaction, the total amount of ethylene added was 701 g. The reactor was depressurized 12 h after the reaction, 1 g of sorbic acid was added to terminate the polymerization reaction, and then the resulting polymer was discharged. The polymer had a solid content of 48.23%, with a theoretical solid content of 70.10%, and a monomer conversion rate was 68.80%. The incorporation amount of ethylene was 55.6% as measured with the FTIR method, and a melt flow index at 300 g/10 min (190°C/2.16 kg).

### Example 3

In this example, the method for preparing the EVA copolymer with high ethylene content by polymerization in solution under a low to a medium pressure was as follows.

A 5 L high-pressure stainless-steel reactor was evacuated three times with nitrogen to remove moisture and oxygen in the reactor. The reactor was provided with a mechanical stirrer, temperature and pressure measuring devices, and a feeding port. 800 g of xylene, 300 g of vinyl acetate, and 1 g of AkzoNobel Trigonox^{®} 42S (tert-butyl peroxy-3,5,5-trimethylhexanoate) initiator were introduced under vacuum, and after all components were added, the reactor was evacuated three times with nitrogen for replacement. Then, ethylene was added while the system was heated to 125°C and the reaction pressure rose to 15.2 MPa. Here, the amount of the ethylene added was 755 g (the ratio of the mass of the vinyl acetate to the initial mass of the ethylene was 1 :2.52). Taking the temperature reaching 125°C as the start of the reaction, ethylene was then added continuously to maintain the pressure of ethylene at 15.2 MPa to react for 5 h, and the temperature was controlled at 125°C during the reaction. After 5 hours of reaction, the total amount of ethylene added was 873 g. The reactor was depressurized 5 h after the reaction, and cooled to room temperature, and then the resulting polymer was discharged. The polymer had a solid content of 38.00%, with a theoretical solid content of 52.70%, and a monomer conversion rate was 72.11%. The incorporation amount of ethylene was 65% as measured with the FTIR method, and a melt flow index at 55 g/10 min (190°C/2.16 kg).

### Example 4

In this example, the method for preparing the EVA copolymer with high ethylene content by polymerization in solution under a low to a medium pressure was as follows.

A 5 L high-pressure stainless-steel reactor was evacuated three times with nitrogen to remove moisture and oxygen in the reactor. The reactor was provided with a mechanical stirrer, temperature and pressure measuring devices, and a feeding port. 875 g of diethyl carbonate, 175 g of vinyl acetate, 25 g of propylene, and 2.99 g of AIBN initiator were added under vacuum, and after all components were added, the reactor was evacuated three times with nitrogen for replacement. Then, ethylene was added while the system was heated to 64°C and the reaction pressure rose to 6 MPa. Here, the amount of the ethylene added was 543 g (the ratio of the mass of the vinyl acetate to the initial mass of the ethylene was 1:3.1). Taking the temperature reaching 64°C as the start of the reaction, ethylene was then added continuously to maintain the pressure of ethylene at 6 MPa to react for 12 h, and the temperature was controlled at 64°C during the reaction; and after the reaction started, 1 g of AIBN initiator (10wt%) dissolved in ethyl acetate was continuously added. After 12 hours of reaction, the total amount of ethylene added was 695 g. The reactor was depressurized 12 h after the reaction, 1 g of sorbic acid was added to terminate the polymerization reaction, and then the resulting polymer was discharged. The polymer had a solid content of 30.00%, with a theoretical solid content of 50.00%, and a monomer conversion rate was 60.00%. The incorporation amount of ethylene was 65% as measured with the FTIR method, and a melt index at 118 g/10 min (190°C/2.16 kg).

### Example 5

In this example, the method for preparing the EVA copolymer with high ethylene content by polymerization in solution under a low to a medium pressure was as follows.

A 5 L high-pressure stainless-steel reactor was evacuated three times with nitrogen to remove moisture and oxygen in the reactor. The reactor was provided with a mechanical stirrer, temperature and pressure measuring devices, and a feeding port. 439 g of tert-butanol, 330 g of vinyl acetate, and 1.41 g of AIBN initiator were added under vacuum, and after all components were added, the reactor was evacuated three times with nitrogen for replacement. Then, ethylene was added while the system was heated to 64°C and the reaction pressure rose to 6 MPa. Here, the amount of the ethylene added was 612 g (the ratio of the mass of the vinyl acetate to the initial mass of the ethylene was 1:1.85). Taking the temperature reaching 64°C as the start of the reaction, ethylene was then added continuously to maintain the pressure of ethylene at 8 MPa to react for 12 h, and the temperature was controlled at 64°C during the reaction; and after the reaction started, 1 g of AIBN initiator (10wt%) dissolved in ethyl acetate was continuously added. 1.5 g of lauryl mercaptan as the chain transfer agent was added 3 hours after the start of reaction. After 12 hours of reaction, the total amount of ethylene added was 775 g. The reactor was depressurized 12 h after the reaction, 1 g of sorbic acid was added to terminate the polymerization reaction, and then the resulting polymer was discharged. The polymer had a solid content of 57.64%, with a theoretical solid content of 71.50%, and a monomer conversion rate was 80.62%. The incorporation amount of ethylene was 58% as measured with the FTIR method, and a melt flow index at 35 g/10 min (190°C/2.16 kg).

### Example 6

In this example, the method for preparing the EVA copolymer with high ethylene content by polymerization in solution under a low to a medium pressure was as follows.

A 5 L high-pressure stainless-steel reactor was evacuated three times with nitrogen to remove moisture and oxygen in the reactor. The reactor was provided with a mechanical stirrer, temperature and pressure measuring devices, and a feeding port. 1050 g of tetrahydrofuran, 100 g of vinyl acetate, and 2.99 g of AIBN initiator were added under vacuum, and after all components were added, the reactor was evacuated three times with nitrogen for replacement. Then, ethylene was added while the system was heated to 64°C and the reaction pressure rose to 8 MPa. Here, the amount of the ethylene added was 850 g (the ratio of the mass of the vinyl acetate to the initial mass of the ethylene was 1:8.5). Taking the temperature reaching 64°C as the start of the reaction, ethylene was then added continuously to maintain the pressure of ethylene at 8 MPa to react for 12 h, and the temperature was controlled at 64°C during the reaction; and after the reaction started, 1.68 g of AIBN initiator (10wt%) dissolved in ethyl acetate was continuously added. After 12 hours of reaction, the total amount of ethylene added was 990 g. After 12 hours of reaction, the reactor was depressurized 12 h of reaction, 1 g of sorbic acid was added to terminate the polymerization reaction, and then the resulting polymer was discharged. The polymer had a solid content of 22.00%, with a theoretical solid content of 50.90%, and a monomer conversion rate was 43.22%. The incorporation amount of ethylene was 78% as measured with the FTIR method, and a melt flow index at 400 g/10 min (190°C/2.16 kg).

### Example 7

In this example, the method for preparing the EVA copolymer with high ethylene content by polymerization in solution under a low to a medium pressure was as follows.

A 5 L high-pressure stainless-steel reactor was evacuated three times with nitrogen to remove moisture and oxygen in the reactor. The reactor was provided with a magnetic drive mechanical stirrer, temperature and pressure measuring devices, and a feeding port. 80 g of n-pentane, 30 g of vinyl acetate were added under vacuum, and after all components were added, the reactor was evacuated three times with nitrogen for replacement. Then, ethylene was added while the system was heated to 150°C and the reaction pressure rose to 27 MPa. Here, the amount of the ethylene added was 93 g (the ratio of the mass of the vinyl acetate to the initial mass of the ethylene was 1: 3.1). To the reactor, 0.3 g of AkzoNobel Trigonox^{®} 42S (tert-butyl peroxy-3,5,5- trimethylhexanoate) was added within a 5 min period. Taking the initial initiator addition as the start of the reaction, the reaction was allowed to go for 2 hours. No additional ethylene was added to the reactor after the initiation addition. After 2 hours of reaction, the reactor was cooled down to 60°C. After the reactor was depressurized, 1 g of sorbic acid was added to terminate the polymerization, and the resulting polymer was discharged. The polymer had a solid content of 48%, with a theoretical solid content of 58%. The incorporation amount of ethylene was 72% as measured with the FTIR method, and a melt flow index at 170 g/10 min (190°C/2.16 kg).

### Example 8

In this example, the method for preparing the EVA copolymer with high ethylene content by polymerization in solution under a low to a medium pressure was as follows.

A 5 L high-pressure stainless-steel reactor was evacuated three times with nitrogen to remove moisture and oxygen in the reactor. The reactor was provided with a magnetic drive mechanical stirrer, temperature and pressure measuring devices, and a feeding port. At 25°C, to the reactor, 50 g of vinyl acetate was added under vacuum, followed by 50 g of CO₂ gas. Then, ethylene was added while the system was heated to 125°C and the reactor pressurized to 64 MPa. Here, the amount of the ethylene added was 132 g (the ratio of the mass of the vinyl acetate to the initial mass of the ethylene was 1: 2.6). To the reactor, 0.2 g of AkzoNobel Trigonox^{®} 42S (tert-butyl peroxy-3,5,5- trimethyl hexanoate) in 4.8 mL of ethyl acetate was added within a 30 min period via a Nexara LC-40 dosage pump. Taking the initial initiator addition as the start of the reaction, the reaction was allowed to go for 1 hour. Ethylene pressure was kept at 64 MPa during the polymerization. After 1 hours of reaction, the reactor was cooled down to 60°C. After the reactor was carefully depressurized, 1 g of sorbic acid in 50 mL of toluene was added to terminate the polymerization, and the resulting polymer mixture was discharged. The incorporation amount of ethylene was 70% as measured with the FTIR method, and a melt flow index at 150 g/10 min (190°C/2.16 kg).

### Example 9

In this example, the method for preparing the EVA copolymer with high ethylene content by polymerization in solution under a low to a medium pressure was as follows.

A 5 L high-pressure stainless-steel reactor was evacuated three times with nitrogen to remove moisture and oxygen in the reactor. The reactor was provided with a magnetic drive mechanical stirrer, temperature and pressure measuring devices, and a feeding port. At 25°C, to the reactor, 30 g of vinyl acetate was added under vacuum, followed by 150 g of dimethyl carbonate. Then, ethylene was added while the system was heated to 125°C and the reactor pressurized to 99 MPa. Here, the amount of the ethylene added was 148 g (the ratio of the mass of the vinyl acetate to the initial mass of the ethylene was 1: 4.9). To the reactor, 0.2 g of AkzoNobel Trigonox^{®} 42S (tert-butyl peroxy-3,5,5- trimethyl hexanoate) in 4.8 mL of ethyl acetate was added within a 30 min period via an ultra-high pressure dosage pump. Taking the initial initiator addition as the start of the reaction, the reaction was allowed to go for 1 hour. Ethylene pressure was kept at 99 MPa during the polymerization. After 1 hours of reaction, the reactor was cooled down to 60°C. After the reactor was carefully depressurized, 1 g of sorbic acid was added to terminate the polymerization, and the resulting polymer was discharged. The incorporation amount of ethylene was 74% as measured with the FTIR method, and a melt flow index at 50 g/10 min (190°C/2.16 kg).

### Comparative Example 1

In this comparative example, the method for preparing the EVA copolymer by polymerization in solution under a low to a medium pressure was basically the same as that in Example 1, except that the temperature for the polymerization reaction was controlled at 64°C, and the pressure of ethylene during the reaction was kept at 0.5 MPa. The resulting polymer had a solid content of 35.82%, with a theoretical solid content of 57.20%, and a monomer conversion rate was 62.62%. The incorporation amount of ethylene was 7.2% as measured with the FTIR method. The melt index and other properties were not measured since the amount of ethylene incorporated in the EVA polymer prepared in this comparative example was too low.

### Comparative Example 2

In this comparative example, the method for preparing the EVA copolymer by polymerization in solution under a low to a medium pressure was basically the same as that in Example 1, except that the amount of the vinyl acetate added is 1250 g, the amount of the ethylene added was 756 g (the ratio of the mass of the vinyl acetate to the initial mass of the ethylene is 0.60:1) when the reaction temperature rose to 64°C, and the total amount of the ethylene added was 806 g after 12 hours of reaction. The resulting polymer had a solid content of 52.92%, with a theoretical solid content of 66.69%, and a monomer conversion rate was 79.35%. The incorporation amount of ethylene was 27% as measured with the FTIR method. The melt index and other properties were not measured since the amount of ethylene incorporated in the EVA polymer prepared in this comparative example did not meet requirements.

### Comparative Example 3

In this comparative example, the method for preparing the EVA copolymer by polymerization in solution under a low to a medium pressure was basically the same as that in Example 1, except that 3000 g of tert butanol was added; the amount of the vinyl acetate added was 50 g; the amount of the ethylene added was 1200 g (the ratio of the mass of the vinyl acetate to the initial mass of the ethylene is 1:24) when the reaction temperature rose to 64°C; and the total amount of the ethylene added is 1300 g after 12 hours of reaction. The resulting polymer had a solid content of 2.5%, with a theoretical solid content of 31.00%, and a monomer conversion rate was 8.06%. The incorporation amount of ethylene was 85% as measured with the FTIR method. Since the monomer conversion rate in this comparative example was excessively low, the yield of the prepared EVA copolymer was too low to be used for measuring the property indexes.

By comparing the data from the examples and comparative examples, it can be seen that, with the method of the invention, when the pressure is too low (below 1 MPa), the amount of the ethylene incorporated in the EVA copolymer is too low, which cannot meet the requirements of the invention. Or, when the initial concentration of the vinyl acetate in the reaction system is too low (the ratio of the mass of the vinyl acetate to the initial mass of the ethylene is less than 1:20), although the amount of the ethylene incorporated in the EVA copolymer is high, the monomer conversion rate is too low to be industrially viable; finally, the object of the invention to reduce the production cost and improve the ethylene incorporation in EVA at the same time cannot be achieved; and the waste raw materials can also cause a burden on environmental management. Or, when the initial concentration of the vinyl acetate in the reaction system is too high (the ratio of the mass of the vinyl acetate to the initial mass of the ethylene is higher than 1:1), the amount of the ethylene incorporated in the EVA copolymer prepared is greatly reduced, such that the EVA copolymer cannot be used in the fields where the EVA copolymer prepared at high temperature and under high pressure in a conventional way is used.

Described above are only preferred embodiments of the invention, and are not intended to limit the protection scope of the invention. For any technician familiar with the art, various alternations and variations can be made to the invention. Any simple equivalent variations and modifications made based on the protection scope of the invention and the content of the specification should be included within the protection scope of the invention.

## Claims

1. A method for preparing an EVA copolymer with a high ethylene content by solution polymerization under a low to a medium pressure, comprising the following steps: initiating with a free radical initiator(s), a copolymerization reaction between ethylene and vinyl acetate in a solvent under a low to a medium pressure to obtain the EVA copolymer; and continuing to add ethylene during the reaction to maintain the low to medium pressure, wherein the low to medium pressure is between 1 MPa and 101 MPa, and a ratio of a mass of the vinyl acetate to a mass of the initially added ethylene is (1:1) to (1:20).

2. The method for preparing the EVA copolymer with high ethylene content by solution polymerization under a low to a medium pressure according to Claim 1, wherein the low to medium pressure is between 4 MPa and 95 MPa or between 4 MPa and 81 MPa.

3. The method for preparing the EVA copolymer with a high ethylene content by solution polymerization under a low to a medium pressure according to claim 1 or 2, wherein the ratio of the mass of the vinyl acetate to the mass of the initially added ethylene is (1:1) to (1:10).

4. The method for preparing the EVA copolymer with high ethylene content by solution polymerization under a low to a medium pressure according to any one of claims 1-3, wherein the mass of the vinyl acetate added is not more than 50% of a total mass of all monomers added.

5. The method for preparing the EVA copolymer with high ethylene content by solution polymerization under a low to a medium pressure according to any one of claims 1 - 4, wherein a mass of the free radical initiator(s) is 0.05%-1% of a total mass of all monomers.

6. The method for preparing the EVA copolymer with a high ethylene content by solution polymerization under a low to a medium pressure according to any one of claims 1 - 5, further comprising the step of adding a third monomer to a reaction system, wherein the third monomer is one or more selected from olefins, acrylates, methacrylates, unsaturated acids, and acrylonitrile; the olefins comprise propylene, n-butene, 1-hexene, 1,5-dihexene, 1-octene, 1,7-dioctene, and vinyl chloride; the acrylates comprise methyl acrylate, ethyl acrylate, n-butyl acrylate, isobutyl acrylate, n-propyl acrylate, 2-ethylhexyl acrylate, n-octyl acrylate, isooctyl acrylate, decyl acrylate, 2-hydroxyethyl acrylate, and 2-hydroxypropyl acrylate; the methacrylates comprise methyl methacrylate, ethyl methacrylate, isobutyl methacrylate, n-butyl methacrylate, tert-butyl methacrylate, isopropyl methacrylate, hexyl methacrylate, 2-hydroxyethyl methacrylate, 2-hydroxypropyl methacrylate, glycidyl methacrylate, cyclohexyl methacrylate, and dimethylaminoethyl methacrylate; and the unsaturated acids comprise acrylic acid, methacrylic acid, itaconic acid, crotonic acid, and maleic acid.

7. The method for preparing the EVA copolymer with a high ethylene content by solution polymerization under a low to a medium pressure according to any one of claims 1-6, wherein the solvent is one or more selected from C1-C6 alcoholic solvents, C1-C6 alcohol and water mixture, supercritical CO₂, saturated aliphatic solvents, halogenated hydrocarbon solvents, naphthenic hydrocarbon solvents, aromatic hydrocarbon solvents, ester solvents, ketone solvents, aldehyde solvents, furan solvents, as well as acetic acid, ether, triethylamine, n-butyl mercaptan; the C1-C6 alcoholic solvents comprise methanol, ethanol, propanol, isopropanol, n-butanol, tert-butanol, isobutanol, n-pentanol, and n-hexanol; the saturated aliphatic solvents comprise n-pentane, hexane, n-heptane, n-octane, n-decane, n-dodecane, and isododecane; the halogenated hydrocarbon solvents comprise nomochloromethane, dichloromethane, chloroform, carbon tetrachloride, bromoethane, chloro-n-butane, bromo-n-butane, and iodo-n-butane; the naphthenic hydrocarbon solvents comprise cyclopentane, methylcyclopentane, cyclohexane and methylcyclohexane; the aromatic hydrocarbon solvents comprise benzene, toluene, ethylbenzene, xylene, and cumene; the ester solvents comprise methyl acetate, ethyl acetate, dimethyl carbonate, and diethyl carbonate; the ketone solvents comprise acetone and butanone; the aldehyde solvents comprise acetaldehyde and crotonaldehyde; and the furan solvents comprise tetrahydrofuran.

8. The method for preparing the EVA copolymer with a high ethylene content by solution polymerization under a low to a medium pressure according to any one of claims 1-7, further comprising the step of adding a chain transfer agent to a reaction system, wherein the chain transfer agent is lauryl mercaptan and/or mercaptoethanol.

9. The method for preparing the EVA copolymer with a high ethylene content by solution polymerization under a low to a medium pressure according to any one of claims 1-8, wherein the free radical initiator is an azo initiator and/or a peroxide initiator.

10. The method for preparing the EVA copolymer with a high ethylene content by solution polymerization under a low to a medium pressure according to any one of claims 1 -9, wherein a percent content by mass of the ethylene in the EVA copolymer is ≥ 50%.
